Europäisches Patentamt

**European Patent Office**

Office européen des brevets

(11) Veröffentlichungsnummer : **0 133 947
B1**

(12) EUROPÄISCHE PATENTSCHRIFT

(45) Veröffentlichungstag der Patentschrift :
16.06.87

(51) Int. Cl.⁴ : **B 62 B 15/00**

(21) Anmeldenummer : **84108636.6**

(22) Anmeldetag : **21.07.84**

(54) **Skibob.**

(30) Priorität : **02.08.83 AT 2794/83**

(43) Veröffentlichungstag der Anmeldung :
**13.03.85 Patentblatt 85/11**

(45) Bekanntmachung des Hinweises auf die Patenterteilung : **16.06.87 Patentblatt 87/25**

(84) Benannte Vertragsstaaten :
**CH DE FR IT LI**

(56) Entgegenhaltungen :
**CH-A-   524 377
CH-A-   547 647
DE-U- 7 340 618
DE-U- 8 133 936**

(73) Patentinhaber : **Flachsmann, Mike
Butzenstrasse 54/56
CH-8038 Zürich (CH)**

(72) Erfinder : **Flachsmann, Mike
Butzenstrasse 54/56
CH-8038 Zürich (CH)**

(74) Vertreter : **Rottmann, Richard
Rottmann Patentanwälte AG Dufourstrasse 101
CH-8034 Zürich (CH)**

## Beschreibung

Die vorliegende Erfindung bezieht sich auf einen Skibob, welcher einen Skibobrahmen mit Hinterski und mindestens eine lösbar am Rahmen befestigte Baueinheit, bestehend aus Lenksäule, Aufhängung und Vorderski, aufweist, wobei der Vorderski durch geneigte Lenkerpaare mit der federnd am Vorderski abgestützten Lenksäule verbunden ist.

Die bekannten Skibobs (z. B. CH-A-547 647) weisen einen Rahmen mit Sitzbank mit Hinterski und eine Gabel mit Lenker sowie mit Vorderski auf, wobei je nach Ausführung und Anforderung die Sitzbank und/oder die Gabel gefedert ist. Dabei ist bei den meisten Skibobs die Gabel mit Lenker und Vorderski lösbar am Rahmen befestigt, so dass der Skibob für Transport oder Lagerungszwecke zerlegt werden kann.

Für sportliche Wettbewerbe werden je nach Art des Wettbewerbes verschiedene Skibobs benötigt. So werden für Slalomfahrten Skibobs bevorzugt mit einer gefederten Vordergabel, die zur Aufnahme des Vorderski ein nach vorne gerichtetes Gelenkparallelogramm besitzen (DE-U-8 133 936, DE-U-73 40 618). Solche Gabeln eignen sich aber nicht für Abfahrtsrennen, da der bei Durchfederung vorauseilende Vorderski leicht instabil wird. Bevorzugt wird für Slalomfahrten eine Gabelkonstruktion, bei welcher die Bewegung des Vorderski bei einer Einfederung gleich bleibt oder verzögert wird.

Zweck der Erfindung ist, einen Skibob vorzuschlagen, welcher sowohl für Slalomfahrten als auch für Abfahrtsrennen geeignet ist.

Diese Aufgabe wird durch einen Skibob mit den im Anspruch 1 angegebenen Merkmalen gelöst.

Eine erste Variante eines erfindungsgemässen Skibobs sieht vor, dass der Skibob zwei wahlweise am Skibobgestell lösbar befestigbare Gabeln besitzt, welche je eine für beide Gabeln identisch ausgebildete Lenksäule zur Ankuppelung an das Gestell und je ein identisch ausgebildetes Halteorgan zur Aufnahme des Vorderski aufweist, wobei bei der einen Gabel die vorderen Enden der Lenker der Gelenkparallelogramme in die Fahrtrichtung und bei der anderen Gabel gegen die Fahrtrichtung zeigen, so dass bei der einen Gabel die Vorderski bei der Einfederung der Gabel in der Fahrtrichtung voraus eilt und bei der anderen Gabel, bei einer Einfederung die Bewegung des Vorderski verzögert wird.

Zweckmässigerweise kann das Halteorgan zur Aufnahme des Vorderskis bei beiden Gabeln U-förmig mit trapezförmigen Seiten ausgebildet und schwenkbar an einem Zwischenstück gelagert sein. Dieses Zwischenstück ist bei der einen Gabel als T-Stück und bei der anderen Gabel als geschlossenes U-Profil ausgebildet, an welchem die einen Enden der Lenker zur Bildung der Gelenkparallelogramme angeschlossen sind.

Eine zweite Variante eines erfindungsgemässen Skibobs sieht vor, dass nur eine einzige Gabel vorhanden ist, die mehrere wahlweise einsetzbare Befestigungstellen für die Lenker der Gelenkparallelogramme besitzt, welche je nach Anschlussstelle in der Fahrtrichtung oder gegen die Fahrtrichtung geneigt sind.

Eine bevorzugte Ausführung sieht bei der einen Gabel vor, dass an die Lenksäule ein Kastenrahmen angeschlossen ist, welcher in der Seitenansicht dreieckförmig ausgebildet ist und eine Stärke aufweist, die dem Durchmesser der Lenksäule entspricht. Bei dieser Gabel mit Kastenrahmen weist das Zwischenstück ein geschlossenes U-Profil auf. Die am Zwischenstück angeschlossenen Gelenkpaare werden mit ihren anderen Enden am unteren Seitenteil des Kastenrahmens angelenkt, während ein im Kastenrahmen geführter Gasdruckdämpfer einerseits mit dem Zwischenstück und andererseits mit dem oberen Teil des Kastenrahmens gelenkig verbunden ist. Die andere Gabel weist eine Spiralfeder mit darin angeordnetem Dämpfer auf, welche Feder an die Lenksäule und an den Mittelteil des T-förmigen Zwischenstückes angeschlossen ist.

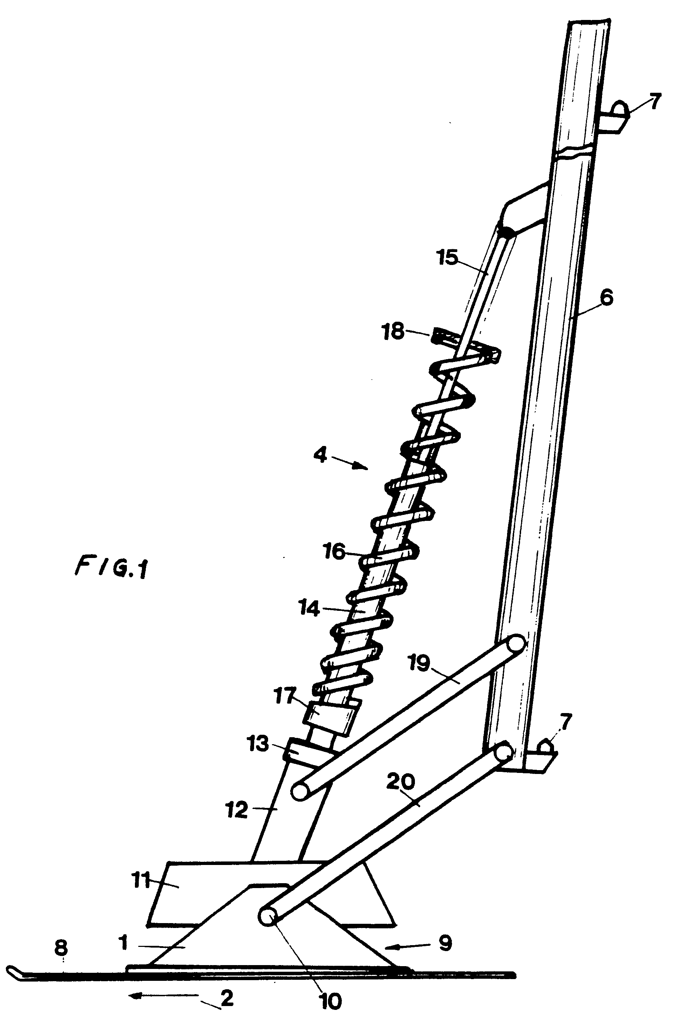

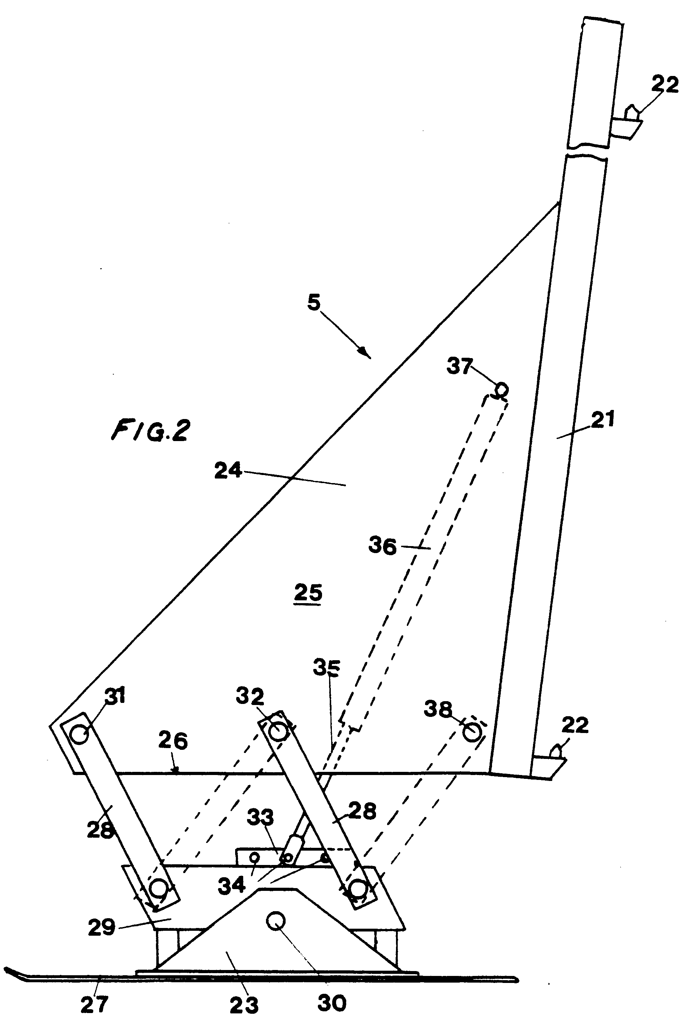

Auf beiliegender Zeichnung ist ein Ausführungsbeispiel des Erfindungsgegenstandes dargestellt und zwar zeigen die Figuren 1 und 2 die beiden Gabeln des Skibobs.

Der Skibob weist einen nicht gezeichneten Rahmen auf, welcher wahlweise mit der Gabel 4 (Fig. 1) oder mit der Gabel 5 (Fig. 2) versehen werden kann.

Die Gabel 4 weist eine Lenksäule 6 auf, welche mit Hilfe von in vorbestimmtem Abstand voneinander angeordneten Bolzen 7 mit dem Rahmen gekoppelt werden kann. Der Vorderski 8 der Gabel 4 ist auf einem Halteorgan 9 angeordnet, welches im Querschnitt U-förmig geformt ist, wobei die Seiten 1 des U-Profils trapezförmig ausgebildet und mit Hilfe eines Querbolzens 10 schwenkbar an einem Zwischenstück 11 gelagert sind. Das Zwischenstück 11 ist T-förmig geformt, wobei der Mittelteil 12 schräg zum Unterteil des Zwischenstückes angeordnet ist. Das gegabelte obere Ende 13 des Mittelteiles 12 ist mit dem Zylinder 14 eines Gasdruckdämpfers verbunden, dessen Kolbenstange 15 mit der Lenksäule 6 gelenkig gekoppelt ist. Der Gasdruckdämpfer ist von einer Spiralfeder 16 umgeben und liegt gegenüber ringförmigen Stützen 17 und 18 auf, die am oberen und unteren Ende des Gasdruckdämpfers befestigt sind. Mit 19 und 20 sind Gelenkpaare bezeichnet, welche das Zwischenstück 11 mit der Lenksäule 6 verbinden. Die gebildeten Gelenkparallelogramme sind in Fahrtrichtung nach vorwärts gerichtet und schliessen einen spitzen Winkel mit dem Vorderski 8 ein.

Bei dieser Gabelkonstruktion werden bei der Einfederung des Rahmens mit Lenksäule 6 die Gelenkpaare 19 und 20 im Uhrzeigersinne so verschwenkt, dass der Vorderski 8 in der Pfeilrichtung 2 voraus eilt.

Anstelle der beschriebenen Gabel kann wahlweise eine zweite in der Figur 2 dargestellte Gabel verwendet werden. Diese Gabel 5 ist mit einer Lenksäule 21 versehen, welche der Lenksäule 6 der vorher beschriebenen Gabel identisch entspricht. Auch diese Lenksäule ist mit Haltebolzen 22 versehen, so dass es am Skibobrahmen einfach befestigt werden kann.

Zur Aufnahme des Vorderski 27 ist wiederum ein Halteorgan 23 vorhanden, welches identisch mit dem Halteorgan 9 ausgebildet ist.

Die Lenksäule 21 ist an einem Kastenrahmen 24 befestigt, welcher seitlich durch zwei annähernd dreieckförmige Seitenwände 25 begrenzt ist. Die eine kurze Seite 26 des Dreiecks verläuft parallel zum Halteorgan 23 befestigten Vorderski 27 und ist durch zwei Gelenkpaare 28 mit einem Zwischenstück 29 verbunden, welches ein geschlossenes U-Profil besitzt. Das Zwischenstück 29 ist mit Hilfe eines Querbolzens 30 zwischen den Schenkeln des U-förmigen Halteorganes 23 angeordnet. Die Verbindungsstellen 31 und 32 der oberen Enden der Gelenkpaare 28 mit dem Kastenrahmen 24 sind so gewählt, dass das Halteorgan 23 samt Vorderski 27 die dargestellte Stellung einnehmen kann, in welcher die Gelenkpaare 28 bezüglich der Verbindungsstellen 31 und 32 entgegen der Fahrtrichtung gerichtet sind. Bei einer Einfederung des Skibobrahmens werden die Gelenkpaare 28 entgegen dem Uhrzeigersinne verschwenkt.

Das Zwischenstück trägt auf seiner Oberfläche eine Mittelrippe 33, welche mit einer Anzahl Querbohrungen 34 versehen ist, mit welchen die Kolbenstange 35 eines Gasdruckdämpfers 36 wahlweise verbunden werden kann. Die Anschlussstelle des Gasdruckdämpfers 36 im Kastenrahmen 24 ist mit 37 bezeichnet.

Die zuletzt beschriebene Gabel wird hauptsächlich für Abfahrtsrennen verwendet, da die Spurstabilität des Skibobs bei hohen Geschwindigkeiten wesentlich erhöht wird.

Im Gebrauch bewirken die, durch die Unebenheiten verursachten Schläge Einfederungen im Sinne einer Verkürzung der Gesamtlänge des Gasdruckdämpfers 36. Dadurch werden die Gelenkpaare 28 entgegen dem Uhrzeigersinne verschwenkt, so dass der Vorderski 27 gegenüber dem Rahmen etwas zurückversetzt wird. Dadurch wird die Stabilität und die Spurtreue des Skibobs bei hohen Geschwindigkeiten wesentlich erhöht. Da beide Gabeln identische Lenksäulen aufweisen, können diese leicht und einfach ausgewechselt werden. Je nach Bedürfnis kommt die eine oder die andere der beschriebenen Gabeln zur Verwendung. Damit können wesentlich Kosten gespart werden, da mit einem einzigen Skibob mit auswechselbarer Gabel dieser den verschiedensten Bedürfnissen angepasst werden kann.

Eine weitere Möglichkeit besteht darin, dass mindestens eine zusätzliche Befestigungsstelle 38 angeordnet wird, mit welcher das obere Ende des hinteren Gelenkpaares 28 wahlweise verbunden werden kann. In diesem Falle wird das obere Ende des vorderen Gelenkpaares 28 mit der mittleren Befestigungsstelle 32 verbunden und die beiden Gelenkpaare 28 nehmen die gestrichelt gezeichnete Lage ein. Bei einer Einfederung werden die Gelenkpaare 28 entgegen dem Uhrzeigersinn verschwenkt.

Das Umstellen der Gelenkpaare 28 kann leicht und einfach durch Lösen und Wiedereinsetzen von zwei Schrauben erfolgen.

Die zuletzt beschriebene Gabel kann also sowohl für Abfahrt als auch für Slalom verwendet werden, nachdem das Gelenkparallelogramm durch die Gelenkpaare 28 entsprechend eingestellt wird.

Schliesslich besteht noch die Möglichkeit, die Härte der Federung einzustellen, indem die untere Befestigungsstelle des Gasdruckdämpfers 35, 36 variiert wird. Gemäss Figur 2 sind in der Mittelrippe 33 drei Querbohrungen 34 vorhanden, wobei das untere Ende der Kolbenstange 35 mit der mittleren Bohrung 34 verbunden ist. Durch Umstellen der Verbindung auf die vordere oder hintere Bohrung 34 wirkt der Gasdruckdämpfer härter oder weicher.

**Patentansprüche**

1. Skibob, welcher einen Skibobrahmen mit Hinterski und mindestens eine lösbar am Rahmen befestigte Baueinheit, bestehend aus Lenksäule (6, 21), Aufhängung und Vorderski (8, 27) aufweist, wobei der Vorderski durch geneigte Lenkerpaare (19, 20 bzw. 28) mit der federnd am Vorderski abgestützten Lenksäule verbunden ist, dadurch gekennzeichnet, dass die geneigt zum Vorderski angeordneten Lenkerpaare (19, 20 bzw. 28) je nach Einsatz einen spitzen oder einen stumpfen Winkel mit dem Vorderski (8, 27) einschliessen, so dass bei der Einfederung der Lenksäule (6, 21) die Lenkerpaare eine Verschwenkung im Uhrzeigersinne oder im Gegenuhrzeigersinne ausführen.

2. Skibob nach Anspruch 1, dadurch gekennzeichnet, dass der Skibob zwei wahlweise am Skibobgestell lösbar befestigbare Gabeln (4, 5) besitzt, welche je eine für beide Gabeln identisch ausgebildete Lenksäule (6, 21) zur Ankuppelung an das Gestell und je ein identisch ausgebildetes Haltorgan (9, 23) zur Aufnahme des Vorderski (8, 27) aufweist, wobei bei der einen Gabel (4) die vorderen Enden der Lenker (19, 20) der Gelenkparallelogramme in der Fahrtrichtung und bei der anderen Gabel (5) gegen die Fahrtrichtung zeigen, so dass bei der einen Gabel (4, 8) der Vorderski bei der Einfederung der Gabel in der Fahrtrichtung voraus eilt und bei der anderen Gabel (5) durch eine Einfederung die Bewegung des Vorderskis verzögert wird.

3. Skibob nach Anspruch 2, dadurch gekennzeichnet, dass die geneigt zum Vorderski (8, 27) angeordneten Gelenkpaare (19, 20 bzw. 28) mit dem Vorderski (8, 27) wahlweise einen spitzen oder einen stumpfen Winkel einschliessen und bei Einfederung wahlweise eine Verschwenkung im Uhrzeigersinne oder dem Uhrzeigersinne entgegengesetzt ausführen.

4. Skibob nach Ansprüchen 1 und 2, dadurch gekennzeichnet, dass das Halteorgan (9, 23) zur Aufnahme des Vorderskis (8, 27) bei beiden Gabeln (4, 5) U-förmig mit trapezförmigen Seiten ausgebildet und schwenkbar an einem Zwischenstück (11, 29) gelagert ist, welches bei der einen Gabel (4) als T-Stück und bei der anderen Gabel (5) als geschlossenes U-Profil ausgebildet ist und an welchem die einen Enden der Lenker (19, 20, 28) zur Bildung der Gelenkparallelogramme angeschlossen sind.

5. Skibob nach Anspruch 1, dadurch gekennzeichnet, dass nur eine einzige Gabel (5) vorhanden ist, die mehrere wahlweise einsetzbare Befestigungstellen (31, 33, 38) für die Lenker (28) der Gelenkparallelogramme besitzt, welche je nach Anschlussstelle in der Fahrtrichtung oder gegen die Fahrtrichtung geneigt sind.

6. Skibob nach Anspruch 5, dadurch gekennzeichnet, dass bei der einen Gabel (5) an die Lenksäule (21) ein Kastenrahmen (24) angeschlossen ist, welcher in der Seitenansicht dreieckförmig ist und eine Stärke aufweist, die dem Durchmesser der Lenksäule (21) entspricht.

7. Skibob nach Anspruch 6, dadurch gekennzeichnet, dass bei der einen Gabel (5) die am Zwischenstück (29) mit geschlossenem U-Profil angeschlossenen Gelenkpaare (28) mit ihren anderen Enden am unteren Teil des Kastenrahmens (24) angelenkt sind, während ein im Kastenrahmen (24) geführter Gasdruckdämpfer (35, 36) einerseits mit dem Zwischenstück (29) und andererseits mit dem oberen Teil des Kastenrahmens (24) gelenkig verbunden ist und die andere Gabel (4) eine Spiralfeder (16) mit darin angeordnetem Dämpfer (14, 15) aufweist, welcher an die Lenksäule (6) und an den Mittelteil (12) des T-förmigen Zwischenstückes (11) angeschlossen ist.

8. Skibob nach Anspruch 5, dadurch gekennzeichnet, dass die einzige Gabel (5) desselben einen sich in der Längsrichtung des Skibobs erstreckenden Teil (26) besitzt, welcher mit Anschlussstellen (31, 32, 38) für die einen Enden der Gelenkpaare (28) versehen ist.

9. Skibob nach Anspruch 5, dadurch gekennzeichnet, dass die Gabel (5) einen in der Seitenansicht dreieckförmigen Kastenrahmen (24) aufweist, welcher einen annähernd parallel zum Vorderski verlaufenden Rand (26) besitzt, entlang welchem Bohrungen (31, 32, 38) zur wahlweisen Befestigung der oberen Enden der Gelenkpaare (28) vorhanden sind.

10. Skibob nach einem der Ansprüche 6, 7 oder 9, dadurch gekennzeichnet, dass im Innern des Kastenrahmens (24) ein Gasdruckdämpfer (35, 36) geführt ist, welcher unten mit dem Zwischenstück (29) verbunden ist.

11. Skibob nach einem der Ansprüche 6, 7, 9 oder 10, dadurch gekennzeichnet, dass am Zwischenstück (29) eine Mittelrippe (33) mit Anschlussstellen für das untere Ende des Gasdruckdämpfers (35, 36) vorhanden ist.

**Claims**

1. Skibob comprising a skibob-frame with a rear-ski and at least one construction-unit detachably coupled with said frame and consisting of a steering column (6, 21), suspension means and a front-ski (8, 27), said front ski being connected to the steering column by means of two inclined links (19, 20 ; 28), and said steering column being resiliently supported on said front-ski, characterized in that the links (19, 20 ; 28) are arranged in an inclined position with respect to the front ski, and include an acute angle or an obtuse angle with said front ski (8, 27), depending on its operation, in such a manner that by the springy movement of the steering column (6, 21) the links rotate clockwise or counter-clockwise.

2. Skibob according to claim 1, characterized in that the skibob comprises two forks (4, 5) which are selectively and releasably couplable to the frame, each of said forks comprising an identically formed steering column (6, 21) for being connected to the frame and an identically formed holding member (9, 23) for receiving the front ski (8, 27) the front ends of the links (19, 20) at one of the forks (4) forming a parallelogram pointing in the running direction and at the other fork (5) pointing against the running direction, so that one of the forks (4, 8) at the springy motion of the fork causes the front ski to lead in the running direction and that the other fork (5) at the springy motion causes a trailing motion of the front-ski.

3. Skibob according to claim 2, characterized in that the links (19, 20 ; 28) which are arranged in an inclined position with respect to the front ski (8, 21) enclose alternatively an acute angle and an obtuse angle with respect to the front ski and that by the springy action they alternatively rotate clockwise or counter-clockwise.

4. Skibob according to claims 1 and 2, characterized in that the holding member (9, 2) for both of the forks (4, 5) for receiving the front skis is U-shaped with trapezoidal sides and is pivotably arranged on an intermediate member (11, 29) which consists for one of the forks (4) of a T-shaped part and for the other fork (5) of a closed U-shaped part and at which the one ends of the links (19, 20 ; 28) are coupled in order to form joint-parallelograms.

5. Skibob according to claim 1, characterized in that there is provided one single fork (5) with various selectively operable fastening points (31, 33, 38) for the links (28) forming a joint-parallelogram, in such a manner that according to the selected fastening points the links point in the running direction or in the opposite direction.

6. Skibob according to claim 5, characterized in that at the single fork (5) a box-type frame (24) is connected to the steering column (21), said box-type frame having a triangular shape when viewed from the side and a thickness equal to the diameter of the steering column.

7. Skibob according to claim 6, characterized in that at one of the forks (5) the links (28) coupled with the intermediate member (29) of closed U-shaped part are connected at their other ends to the lower part of the box-type frame (24), whereas a gas-type shock absorber (35, 36) is arranged in said box-type frame (24) and linked with one of its ends to the intermediate member (29) and with the other of its ends to the upper part of said box-type frame (24) ; the other fork (4) comprising a helical spring (16) including shock absorber means (14, 15) which are coupled to the steering column and with the middle part (12) of this T-shaped intermediate member.

8. Skibob according to claim 5, characterized in that the single fork (5) comprises a part (26) extending in the lengthwise direction of the skibob and having connecting points (31, 32, 38) for the one ends of the two links (28).

9. Skibob according to claim 5, characterized in that the fork (5) has a box-type frame (24) of triangular shape when viewed from the side, said box-type frame (24) comprising an edge (26) extending approximately parallel to the front ski, and along which edge (26) holes (31, 32, 38) are provided for selectively coupling the upper ends of the two links.

10. Skibob according to one of the claims 6, 7 or 9, characterized in that within the box-type frame (24) there is provided a gas-type shock absorber (35, 36) which is coupled at its lower end with the intermediate member (29).

11. Skibob according to one of the claims 6, 7, 9 or 10, characterized in that the intermediate member (29) comprises a central rib (33) with connecting points for the lower end of the gas-type shock absorber (35, 36).

**Revendications**

1. Bobsleigh-ski qui présente un châssis avec un ski arrière et au moins un ensemble fixé, de façon amovible, au châssis et constitué d'une colonne de direction (6, 21), d'une suspension et d'un ski avant (8, 27), étant précisé que le ski avant est relié, par des paires de bras oscillants inclinées (19, 20 ou 28) avec la colonne de direction qui s'appuie élastiquement sur le ski avant, caractérisé en ce que les paires de bras oscillants (19, 20 ou 28), disposées inclinées par rapport au ski avant, font, selon chaque fois l'utilisation, un angle aigu ou un angle obtus avec le ski avant (8, 27), de sorte qu'en cas de rétraction élastique de la colonne de direction (6, 21) les paires de bras oscillants exécutent un pivotement dans le sens horaire ou dans le sens anti-horaire.

2. Bobsleigh-ski selon la revendication 1, caractérisé en ce que le bobsleigh-ski possède deux fourches (4, 5) que l'on peut au choix, fixer, de façon amovible, au châssis et qui présentent chacune une colonne de direction (6, 21) conçue identique pour les deux fourches pour les coupler au châssis et chacune un organe support (9, 23), conçu identique, pour recevoir le ski avant (8, 27), étant précisé que, dans le cas de l'une des fourches (4), les extrémités avant des bras oscillants (19, 20) des parallélogrammes articulés sont dirigées dans le sens de l'avancement et, dans le cas de l'autre fourche (5), sont dirigées dans le sens contraire à l'avancement, de sorte que, dans le cas de l'une des fourches (4, 8) le ski avant part en avant dans le sens de l'avancement en cas de rétraction élastique de la fourche et que, dans le cas de l'autre fourche (5), le mouvement du ski avant est retardé par une rétraction élastique.

3. Bobsleigh-ski selon la revendication 2, caractérisé en ce que les paires de bras oscillants articulées (19, 20 ou 28) disposées inclinées par rapport au ski avant (8, 28) font, au choix, avec le ski avant (8, 27) un angle aigu ou un angle obtus ; et en ce que, en cas de rétraction élastique, ils exécutent au choix un pivotement sens horaire ou un pivotement sens anti-horaire.

4. Bobsleigh-ski selon la revendication 1 et 2, caractérisé en ce que l'organe support (9, 23) prévu pour recevoir le ski avant (8, 27) est conçu, dans le cas des deux fourches (4, 5), en forme de U avec des côtés en forme de trapèze ; en en ce qu'il est porté, avec possibilité de pivotement, sur une pièce intermédiaire (11, 29) qui, pour l'une des fourches (4) a la forme d'une pièce en T et, pour l'autre fourche (5), a la forme d'un profil U fermé et à laquelle se raccorde l'une des extrémités des bras oscillants (19, 20, 28) pour former les parallélogrammes articulés.

5. Bobsleigh-ski selon la revendication 1, caractérisé en ce qu'il n'y a qu'une seule fourche (5) qui possède plusieurs emplacements de fixation (31, 33, 38) que l'on peut utiliser au choix pour les bras oscillants (28) des parallélogrammes articulés, bras oscillants qui, selon chaque fois les emplacements de raccordement sont inclinés dans le sens de l'avancement ou dans le sens contraire à l'avancement.

6. Bobsleigh-ski selon la revendication 5, caractérisé en ce que, dans le cas de l'une des fourches (5), à la colonne de direction (21) est raccordé un cadre caissonné (24) qui a une forme triangulaire en vue latérale et dont l'épaisseur correspond au diamètre de la colonne de direction (21).

7. Bobsleigh-ski selon la revendication 6, caractérisé en ce que, dans le cas de l'une des fourches (5), les paires de bras oscillants articulées (28) reliées à la pièce intermédiaire (29) qui a un profil en forme de U fermé sont articulées par leurs autres extrémités à la partie inférieure du cadre caissonné (24), tandis qu'un amortisseur à pression de gaz (35, 36) guidé dans le cadre caissonné (24) est relié, avec articulation, d'une part, à la pièce intermédiaire (29) et d'autre part, à la partie supérieure du cadre caissonné (24) ; et, en ce que l'autre fourche (24) présente un ressort spiral (16) dans lequel est disposé l'amortisseur (14, 15) et qui est relié à la colonne de direction (6) et à la partie médiane (12) de la pièce intermédiaire en forme de T (11).

8. Bobsleigh-ski selon la revendication 5, caractérisé en ce que la fourche unique (5) de ce bobsleigh-ski possède une partie (26) qui va en s'étendant dans la direction longitudinale du bobsleigh-ski et qui présente des emplacements de raccordement (31, 32, 38) pour l'une des extrémités des paires de bras oscillants articulées (28).

9. Bobsleigh-ski selon la revendication 5, caractérisé en ce que la fourche (5) présente un cadre caissonné (24) qui a, en vue latérale, une forme triangulaire et qui possède un bord (26) qui court approximativement parallèlement au ski avant et le long duquel existent des alésages (31, 32, 38) pour y fixer, au choix, des extrémités supérieures des paires de bras oscillants articulés.

10. Bobsleigh-ski selon l'une des revendications 6, 7 ou 9, caractérisé en ce qu'à l'intérieur du cadre caissonné (24) est guidé un amortisseur à pression de gaz (35, 36) qui est relié en bas avec la pièce intermédiaire (29).

11. Bobsleigh-ski selon l'une des revendications 6, 7, 9 ou 10, caractérisé en ce que sur la pièce intermédiaire (29) existe un rebord médian (33) avec les emplacements de raccordement pour l'extrémité inférieure de l'amortisseur à pression de gaz (35, 36).

FIG.1

FIG.2